# EUROPEAN PATENT SPECIFICATION

(11) **EP 2 600 712 B1**
(45) Date of publication and mention of the grant of the patent: **15.07.2015**
(21) Application number: 11755442.8
(22) Date of filing: 01.08.2011
(51) Int. Cl.: A01N 25/32, A01N 35/10, A01N 43/40, A01N 43/76, A01N 43/90, A01P 13/00

(54) **METHOD FOR PROTECTING SETHOXYDIM-TOLERANT MAIZE AGAINST THE DAMAGING ACTION OF ACCASE-INHIBITING HERBICIDES BY USE OF A SAFENER**
METHODE ZUM SCHUTZ VON SETHOXYDIM-TOLERANTEM MAIS GEGEN DIE SCHÄDIGENDE WIRKUNG VON ACCASE-INHIBIERENDEN HERBIZIDEN DURCH VERWENDUNG EINES SAFENERS
MÉTHODE DE PROTECTION DE MAÏS AVEC UNE TOLÉRANCE POUR LE SÉTHOXYDIME CONTRE LES DOMMAGES CAUSÉS PAR DES HERBICIDES INHIBITEURS DE L'ACCASE EN UTILISANT UN PHYTOPROTECTEUR

(30) Priority: 02.08.2010 GB 201013009
(43) Date of publication of application: 12.06.2013
(73) Proprietor: Syngenta Limited, Guildford Surrey GU2 7YH (GB); Syngenta Participations AG, 4058 Basel (CH)
(72) Inventor: MICHEL, Albrecht, CH-4058 Basel (CH); ZELAYA, Ian, Bracknell Berkshire RG42 6EY (GB)
(74) Representative: Syngenta International AG
(86) International application number: PCT/IB2011/053410
(87) International publication number: WO 2012/017374

(56) References cited:
- EP-A1- 0 365 484
- EP-A1- 1 382 247
- WO-A1-02/060256
- US-A- 5 162 602
- US-A- 5 516 750
- Mark J Vangessel ET AL: "Response of sethoxydim-resistant corn (zea mays) hybrids to postemergence graminicides", Weed Technology, 1 January 1997 (1997-01-01), pages 598-601, XP55011816, Retrieved from the Internet: URL:http://ag.udel.edu/rec/Staff/VanGessel /Documents/Documents/Manuscript database/MJV/WT_11_598_SR_corn.pdf [retrieved on 2011-11-10]
- RAFAEL DE PRADO ET AL: "Resistance to ACCase inhibitor herbicides in a green foxtail (Setaria viridis) biotype in Europe", WEED SCIENCE, vol. 52, no. 4, 1 July 2004 (2004-07-01), pages 506-512, XP55011808, ISSN: 0043-1745, DOI: 10.1614/WS-03-097R
- BEV J. INCLEDON ET AL: "Inhibition of ACCase220 and ACCase240 Isozymes from Sethoxydim-Resistant and -Susceptible Maize Hybrids +", JOURNAL OF AGRICULTURAL AND FOOD CHEMISTRY, vol. 47, no. 1, 1 January 1999 (1999-01-01), pages 299-304, XP55011830, ISSN: 0021-8561, DOI: 10.1021/jf980124j

## Description

The present invention relates to a new method of protecting maize, which is tolerant to cycloxydim and sethoxydim, from damaging Acetyl-CoA Carboxylase (ACCase) inhibiting herbicides.

ACCase inhibiting herbicides are known in the art and include, for example, cyclohexanedione (DIM), aryloxyphenoxypropionate (FOP) and phenylpyrazoline (DEN) compounds. ACCase inhibiting herbicides are typically used to control a wide variety of grass weeds, including "volunteer" maize, in dicotyledonous crops such as soybean. These compounds cannot be used to control weeds in conventional maize varieties because of the phytotoxicity that they cause to the maize. Cycloxydim and Sethoxydim resistant (SR) maize (described in US 5,162,602) has been developed, which features an altered ACCase enzyme achieved through tissue culture and mutation, and this maize is tolerant to both sethoxydim and cycloxydim. Accordingly, it is possible to use these particular ACCase inhibiting herbicides to safely control weeds in SR maize varieties.

Other ACCase inhibiting herbicides are, however, not sufficiently selective and continue to cause significant injury to the SR maize. For the purposes of the present invention such ACCase inhibiting herbicides are referred to as "damaging" ACCase inhibiting herbicides. WO 02/060256, US 5,516,750 and EP-A-1382247 disclose the use of certain safeners for the protection of crop plants against the phytotoxicity of pesticides, including ACCase-inhibitors. The present invention is based upon the surprising discovery that the application of certain herbicide safeners to the SR maize affords protection from ACCase inhibiting herbicides at rates which would normally be damaging. Indeed a synergistic response is apparent between the safety afforded by the SR maize and the chemical safener giving rise to a "super-safening" effect. This invention thus has significant commercial relevance as it permits the use of a far broader number of ACCase inhibiting herbicides to selectively control weeds, especially of problematic grass weeds, in maize.

Thus, according to the present invention, there is provided a method of protecting maize, which is tolerant to cycloxydim and sethoxydim, from application of a damaging ACCase inhibiting herbicide selected from the group consisting of pinoxaden, clodinafop-P-propargyl, fenoxaprop-P-ethyl, fluazifop-P-butyl, butroxydim and tralkoxydim, the method comprising applying to said maize, parts thereof or locus thereof an antagonistically effective amount of the safener N-(2-methoxybenzoyl)-4-[(methylaminocarbonyl) amino]benzenesulfonamide.

The present invention further provides a method of selectively controlling weeds at a locus, the locus comprising maize which is tolerant to cycloxydim and sethoxydim and weeds, the method comprising applying to the locus a herbicidal composition comprising a weed controlling amount of a damaging ACCase inhibiting herbicide selected from the group consisting of pinoxaden, clodinafop-P-propargyl, fenoxaprop-P-ethyl, fluazifop-P-butyl, butroxydim and tralkoxydim, wherein the maize is protected from the damaging ACCase inhibiting herbicide by applying to said maize, parts thereof or locus thereof an antagonistically effective amount of the safener N-(2-methoxybenzoyl)-4-[(methylaminocarbonyl) amino]benzenesulfonamide.

Examples of ACCase inhibiting herbicides are known, for example, from the Pesticide Manual, 15th Edition published in 2009 by the British Crop Protection Council. Damaging ACCase inhibiting herbicides include pinoxaden, clodinafop-P-propargyl, fenoxaprop-P-ethyl, fluazifop-P-butyl, propaquizafop, quizalofop-P-ethyl, butroxydim, tralkoxydim, tepraloxydim, clethodim, profoxydim, diclofop-methyl, haloxyfop-P-methyl and haloxyfop-P-etotyl - including mixtures thereof.

In a preferred embodiment the ACCase inhibiting herbicide is selected from the group consisting of pinoxaden, clodinafop-P-propargyl, fenoxaprop-P-ethyl and fluazifop-P-butyl. The skilled person will appreciate that in some cases it is possible for the ACCase inhibiting herbicide to exist in an alternative form (e.g an alternative optical isomer, salt, ester) and such alternative forms are envisaged with regard to the methods of the present invention.

The safeners benoxacor, cloquintocet-mexyl, isoxadifen-ethyl and cyprosulfamide are also known from the Pesticide Manual. The safener N-(2-methoxybenzoyl)-4-[(methylaminocarbonyl)amino]benzenesulfonamide is known from EP-A-0365484.

Maize which is tolerant to cycloxydim and sethoxydim is known in the art (see for example US 5,162,602). These tolerant maize lines have been developed via *in vitro* selection and the tolerance is believed to be conferred via a mutation in the plastid encoded ACCase. Thus, in a preferred embodiment the maize which is tolerant to cycloxydim and sethoxydim comprises an Ile1781Leu mutation (identified relative to the *Alopecurus myosuroides* ACCase protein identided via EMBL accession AJ310767). Cross-tolerance to sethoxydim and cycloxydim herbicides is reported in De Prado R. et al. (2004), Weed Science 52 p506-512. Vangessel M J et al. (1997) Weed Technology 598 - 601 discloses the use of the ACCase-inhibiting herbicides sethoxydim, quizalofop-P, fenoxaprop-P, fluazifop-P and clethodim against the sethoxydim-resistant corn hybrid DeKalb 592SR. Sethoxydim resistant maize in further discussed in Incledon B J et al. (1999) Journal of Agricultural and Food Chemistry 47(1) 299-304. Examples of commercially available maize which exhibits tolerance to cycloxydim and sethoxydim include "Dekalb 592 SR" and "LEXXOR".

With regard to the method of protecting maize, which is tolerant to cycloxydim and sethoxydim, from application of weed controlling a damaging ACCase inhibiting herbicide, the method comprises applying a defined safener to said maize, parts thereof or locus. Thus the safener may be applied to the maize as a seed dressing for example, or pre- and/or post emergence at a locus e.g a field where the maize is to be grown.

With regard to the method of selectively controlling weeds at a locus comprising applying to the locus a herbicidal composition comprising a weed controlling amount of a damaging ACCase inhibiting herbicide and the safener it should be understood that the herbicidal composition can be applied to the locus (e.g field) as a pre- and/or post emergence application. The damaging ACCase inhibiting herbicide and safener may be applied sequentially or simultaneously, usually in the form of a tank mixture. It is preferred that the herbicide and safener are applied to the maize simultaneously in a post-emergence application. In an alternative embodiment of the present invention the safener is applied as a seed dressing to the maize and the ACCase inhibiting herbicide is applied after the maize is sown at the locus - preferably as a post emergence application.

Further disclosed is a maize seed, which is tolerant to cycloxydim and sethoxydim, which is treated with N-(2-methoxybenzoyl)-4-[(methylaminocarbonyl) amino]benzenesulfonamide.

Weeds that are controlled by the methods of the present invention include various annual and perennial grasses - including grass weeds which are resistant to glyphosate, acetolactate synthase (ALS) inhibiting herbicides and/or glufosinate.

The herbicidal compositions, used in the methods of the present invention, can be prepared in a variety of ways using formulation additives, such as carriers, solvents and surface-active substances. The resulting formulations can be in various physical forms, for example in the form of dusting powders, gels, wettable powders, water-dispersible granules, water-dispersible tablets, effervescent compressed tablets, emulsifiable concentrates, microemulsifiable concentrates, oil-in-water emulsions, oil flowables, aqueous dispersions, oily dispersions, suspoemulsions, capsule suspensions, emulsifiable granules, soluble liquids, water-soluble concentrates (with water or a water-miscible organic solvent as carrier), impregnated polymer films or in other forms known, for example, from the Manual on Development and Use of FAO Specifications for Plant Protection Products, 5th Edition, 1999. Such formulations can either be used directly or are diluted prior to use. Diluted formulations can be prepared, for example, with water, liquid fertilisers, micronutrients, biological organisms, oil or solvents.

The formulations can be prepared, for example, by mixing the active ingredient with formulation additives in order to obtain compositions in the form of finely divided solids, granules, solutions, dispersions or emulsions. The active ingredients can also be formulated with other additives, for example finely divided solids, mineral oils, vegetable oils, modified vegetable oils, organic solvents, water, surface-active substances or combinations thereof. The active ingredients can also be contained in very fine microcapsules consisting of a polymer. Microcapsules contain the active ingredients in a porous carrier. This enables the active ingredients to be released into their surroundings in controlled amounts (e.g. slow release). Microcapsules usually have a diameter of from 0.1 to 500 microns. They contain active ingredients in an amount of about from 25 to 95 % by weight of the capsule weight. The active ingredients can be present in the form of a monolithic solid, in the form of fine particles in solid or liquid dispersion or in the form of a suitable solution. The encapsulating membranes comprise, for example, natural and synthetic gums, cellulose, styrene-butadiene copolymers, polyacrylonitrile, polyacrylate, polyester, polyamides, polyureas, polyurethane or chemically modified polymers and starch xanthates or other polymers that are known to the person skilled in the art in this connection. Alternatively it is possible for very fine microcapsules to be formed wherein the active ingredient is present in the form of finely divided particles in a solid matrix of a base substance, but in that case the microcapsule is not encapsulated.

The formulation additives suitable for the preparation of the composition according to the invention are known *per se.* As liquid carriers there may be used: water, toluene, xylene, petroleum ether, vegetable oils, acetone, methyl ethyl ketone, cyclohexanone, acid anhydrides, acetonitrile, acetophenone, amyl acetate, 2-butanone, butylenes carbonate, chlorobenzene, cyclohexane, cyclohexanol, alkyl esters of acetic acid, diacetone alcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, N,N-dimethylformamide, dimethyl sulfoxide, 1,4-dioxane, dipropylene glycol, dipropylene glycol methyl ether, dipropylene glycol dibenzoate, diproxitol, alkylpyrrolidone, ethyl acetate, 2-ethyl hexanol, ethylene carbonate, 1,1,1-trichloroethane, 2-heptanone, alpha-pinene, d-limonene, ethyl lactate, ethylene glycol, ethylene glycol butyl ether, ethylene glycol methyl ether, gamma-butyrolactone, glycerol, glycerol acetate, glycerol diacetate, glycerol triacetate, hexadecane, hexylene glycol, isoamyl acetate, isobornyl acetate, isooctane, isophorone, isopropylbenzene, isopropyl myristate, lactic acid, laurylamine, mesityl oxide, methoxypropanol, methyl isoamyl ketone, methyl isobutyl ketone, methyl laurate, methyl octanoate, methyl oleate, methylene chloride, m-xylene, n-hexane, n-octylamine, octadecanoic acid, octylamine acetate, oleic acid, oleylamine, o-xylene, phenol, polyethylene glycol (PEG 400), propionic acid, propyl lactate, propylene carbonate, propylene glycol, propylene glycol methyl ether, p-xylene, toluene, triethyl phosphate, triethylene glycol, xylenesulfonic acid, paraffin, mineral oil, trichloroethylene, perchloroethylene, ethyl acetate, amyl acetate, butyl acetate, propylene glycol methyl ether, diethylene glycol methyl ether, methanol, ethanol, isopropanol, and higher molecular weight alcohols, such as amyl alcohol, tetrahydrofurfuryl alcohol, hexanol, octanol, ethylene glycol, propylene glycol, glycerol, N-methyl-2-pyrrolidone and the like. Water is generally the carrier of choice for the dilution of the concentrates. Suitable solid carriers are, for example, talc, kaolin, titanium dioxide, pyrophyllite clay, silica, attapulgite clay, kieselguhr, limestone, calcium carbonate, bentonite, calcium montomorillonite, cottonseed husks, wheatmeal, soybean flour, pumice, wood flour, ground walnut shells, lignin and similar materials, as described, for example, in CFR 180.1001. (c) & (d).

Suitable surface-active compounds are, depending on the type of the active ingredient to be formulated, non-ionic, cationic and/or anionic surfactants or surfactant mixtures which have good emulsifying, dispersing and wetting properties. The surfactants mentioned below are only to be considered as examples; a large number of further surfactants which are conventionally used in the art of formulation and suitable according to the invention are described in the relevant literature.

Suitable non-ionic surfactants are, especially, polyglycol ether derivatives of aliphatic or cycloaliphatic alcohols, of saturated or unsaturated fatty acids or of alkyl phenols which may contain approximately 3 to approximately 30 glycol ether groups and approximately 8 to approximately 20 carbon atoms in the (cyclo)aliphatic hydrocarbon radical or approximately 6 to approximately 18 carbon atoms in the alkyl moiety of the alkyl phenols. Also suitable are water-soluble polyethylene oxide adducts with polypropylene glycol, ethylenediaminopolypropylene glycol or alkyl polypropylene glycol having 1 to approximately 10 carbon atoms in the alkyl chain and approximately 20 to approximately 250 ethylene glycol ether groups and approximately 10 to approximately 100 propylene glycol ether groups. Normally, the abovementioned compounds contain 1 to approximately 5 ethylene glycol units per propylene glycol unit. Examples which may be mentioned are nonylphenoxypolyethoxyethanol, castor oil polyglycol ether, polypropylene glycol/polyethylene oxide adducts, tributylphenoxypolyethoxyethanol, polyethylene glycol or octylphenoxypolyethoxyethanol. Also suitable are fatty acid esters of polyoxyethylene sorbitan, such as polyoxyethylene sorbitan trioleate.

The cationic surfactants are, especially, quarternary ammonium salts which generally have at least one alkyl radical of approximately 8 to approximately 22 C atoms as substituents and as further substituents (unhalogenated or halogenated) lower alkyl or hydroxyalkyl or benzyl radicals. The salts are preferably in the form of halides, methylsulfates or ethylsulfates. Examples are stearyltrimethylammonium chloride and benzylbis(2-chloroethyl)ethylammonium bromide.

Examples of suitable anionic surfactants are water-soluble soaps or water-soluble synthetic surface-active compounds. Examples of suitable soaps are the alkali, alkaline earth or (unsubstituted or substituted) ammonium salts of fatty acids having approximately 10 to approximately 22 C atoms, such as the sodium or potassium salts of oleic or stearic acid, or of natural fatty acid mixtures which are obtainable for example from coconut or tall oil; mention must also be made of the fatty acid methyl taurates. However, synthetic surfactants are used more frequently, in particular fatty sulfonates, fatty sulfates, sulfonated benzimidazole derivatives or alkylaryl sulfonates. As a rule, the fatty sulfonates and fatty sulfates are present as alkali, alkaline earth or (substituted or unsubstituted) ammonium salts and they generally have an alkyl radical of approximately 8 to approximately 22 C atoms, alkyl also to be understood as including the alkyl moiety of acyl radicals; examples which may be mentioned are the sodium or calcium salts of lignosulfonic acid, of the dodecylsulfuric ester or of a fatty alcohol sulfate mixture prepared from natural fatty acids. This group also includes the salts of the sulfuric esters and sulfonic acids of fatty alcohol/ethylene oxide adducts. The sulfonated benzimidazole derivatives preferably contain 2 sulfonyl groups and a fatty acid radical of approximately 8 to approximately 22 C atoms. Examples of alkylarylsulfonates are the sodium, calcium or triethanolammonium salts of decylbenzenesulfonic acid, of dibutylnaphthalenesulfonic acid or of a naphthalenesulfonic acid/formaldehyde condensate.

Also possible are, furthermore, suitable phosphates, such as salts of the phosphoric ester of a p-nonylphenol/(4-14)ethylene oxide adduct, or phospholipids. Further suitable phosphates are tris-esters of phosphoric acid with aliphatic or aromatic alcohols and/or bis-esters of alkyl phosphonic acids with aliphatic or aromatic alcohols, which are a high performance oil-type additive. These tris-esters have been described, for example, in WO0147356, WO0056146, EP-A-0579052 or EP-A-1018299 or are commercially available under their chemical name. Preferred tris-esters of phosphoric acid for use in the new compositions are tris-(2-ethylhexyl) phosphate, tris-n-octyl phosphate and tris-butoxyethyl phosphate, where tris-(2-ethylhexyl) phosphate is most preferred. Suitable bis-ester of alkyl phosphonic acids are bis-(2-ethylhexyl)-(2-ethylhexyl)-phosphonate, bis-(2-ethylhexyl)-(n-octyl)-phosphonate, dibutyl-butyl phosphonate and bis(2-ethylhexyl)-tripropylene-phosphonate, where bis-(2-ethylhexyl)-(n-octyl)-phosphonate is particularly preferred.

The compositions used in the method according to the invention can preferably additionally include an additive comprising an oil of vegetable or animal origin, a mineral oil, alkyl esters of such oils or mixtures of such oils and oil derivatives. The amount of oil additive used in the composition according to the invention is generally from 0.01 to 10 %, based on the spray mixture. For example, the oil additive can be added to the spray tank in the desired concentration after the spray mixture has been prepared. Preferred oil additives comprise mineral oils or an oil of vegetable origin, for example rapeseed oil such as ADIGOR® and MERO®, olive oil or sunflower oil, emulsified vegetable oil, such as AMIGO® (Rhône-Poulenc Canada Inc.), alkyl esters of oils of vegetable origin, for example the methyl derivatives, or an oil of animal origin, such as fish oil or beef tallow. A preferred additive contains, for example, as active components essentially 80 % by weight alkyl esters of fish oils and 15 % by weight methylated rapeseed oil, and also 5 % by weight of customary emulsifiers and pH modifiers. Especially preferred oil additives comprise alkyl esters of C₈-C₂₂ fatty acids, especially the methyl derivatives of C₁₂-C₁₈ fatty acids, for example the methyl esters of lauric acid, palmitic acid and oleic acid, being important. Those esters are known as methyl laurate (CAS-111-82-0), methyl palmitate (CAS-112-39-0) and methyl oleate (CAS-112-62-9). A preferred fatty acid methyl ester derivative is Emery® 2230 and 2231 (Cognis GmbH). Those and other oil derivatives are also known from the Compendium of Herbicide Adjuvants, 5th Edition, Southern Illinois University, 2000. Also, alkoxylated fatty acids can be used as additives in the inventive compositions as well as polymethylsiloxane based additives, which have been described in WO08/037373.

The application and action of the oil additives can be further improved by combining them with surface-active substances, such as non-ionic, anionic or cationic surfactants. Examples of such anionic, non-ionic and cationic surfactants are listed on pages 7 and 8 of WO 97/34485. Preferred surface-active substances are anionic surfactants of the dodecyl-benzylsulfonate type, especially the calcium salts thereof, and also non-ionic surfactants of the fatty alcohol ethoxylate type. Special preference is given to ethoxylated C₁₂-C₂₂ fatty alcohols having a degree of ethoxylation of from 5 to 40. Examples of commercially available surfactants are the Genapol types (Clariant AG). Also preferred are silicone surfactants, especially polyalkyl-oxide-modified heptamethyltrisiloxanes, which are commercially available e.g. as Silwet L-77®, and also perfluorinated surfactants. The concentration of surface-active substances in relation to the total additive is generally from 1 to 30 % by weight. Examples of oil additives that consist of mixtures of oils or mineral oils or derivatives thereof with surfactants are Edenor ME SU®, Turbocharge® (Syngenta AG) and Actipron® (BP Oil UK Limited).

The said surface-active substances may also be used in the formulations alone, that is to say without oil additives.

Furthermore, the addition of an organic solvent to the oil additive/surfactant mixture can contribute to a further enhancement of action. Suitable solvents are, for example, Solvesso® (ESSO) and Aromatic Solvent® (Exxon Corporation).The concentration of such solvents can be from 10 to 80 % by weight of the total weight. Such oil additives, which may be in admixture with solvents, are described, for example, in US-A-4 834 908. A commercially available oil additive disclosed therein is known by the name MERGE® (BASF Corporation). A further oil additive that is preferred according to the invention is SCORE® (Syngenta Crop Protection Canada.)

In addition to the oil additives listed above, in order to enhance the activity of the composition according to the invention it is also possible for formulations of alkylpyrrolidones, (e.g. Agrimax®) to be added to the spray mixture. Formulations of synthetic latices, such as, for example, polyacrylamide, polyvinyl compounds or poly-1-p-menthene (e.g. Bond®, Courier® or Emerald®) can also be used. Solutions that contain propionic acid, for example Eurogkem Pen-e-trate®, can also be mixed into the spray mixture as activity-enhancing agents.

Further additives which can usually be used in pesticidal formulations include crystallisation inhibitors, viscosity-modifying substances, suspending agents, dyes, antioxidants, foaming agents, light absorbers, mixing aids, anti-foams, complexing agents, neutralising or pH-modifying substances and buffers, corrosion-inhibitors, fragrances, wetting agents, absorption improvers, micronutrients, plasticisers, glidants, lubricants, dispersants, thickeners, anti-freezes, microbiocides, and also liquid and solid fertilisers.

The herbicidal compositions generally contain from 0.1 to 99 % by weight, especially from 0.1 to 95 % by weight, of ACCase inhibitor herbicide and from 1 to 99.9 % by weight of a formulation additive, which preferably includes from 0 to 25 % by weight of a surface-active substance. Whereas commercial products will preferably be formulated as concentrates, the end user will normally employ dilute formulations.

The herbicidal composition may also comprise additional active substances, for example plant growth regulators, fungicides or insecticides, and in particular further herbicides.

The rate of application of the ACCase inhibiting herbicides may vary within wide limits and depends upon the nature of the soil, the method of application (pre- or post-emergence; seed dressing; application to the seed furrow; no tillage application etc.), the crop plant, the weed or grass to be controlled, the prevailing climatic conditions, and other factors governed by the method of application, the time of application and the target crop. The inventively used ACCase inhibiting herbicides are generally applied at a rate of 1 to 4000 g/ha, especially from 5 to 1000 g/ha.

Seed dressing of the safener can be carried out in customary manner, for example as described below:
a) Dressing the seeds with a wettable powder formulation of safener by shaking in a vessel until the formulation is uniformly distributed over the seed surface (dry dressing). In this case, about from 1 to 500g of safener is used per 100kg of seed material.
b) Dressing the seeds with an emusifiable concentrate of safener according to method a) (wet dressing).
c) Dressing by immersing the seed material in a liquid formulation comprising from 100 to 1000ppm of safener for from 1 to 72 hours and , if desired, subsequently drying the seeds (immersion dressing).

The rate of application of safener in relation to the ACCase inhibitor herbicide depends largely on the method of application. In the case of field treatment, which is effected either using a tank mixture comprising a combination of safener and herbicide mixture or by separate application of safener and herbicide mixture, the ratio of herbicides to safener is generally from 100:1 to 1:10, preferably from 20:1 to 1:1.

In the case of field treatment, from 0.001 to 1.0 kg of safener/ha, preferably from 0.001 to 0.25 kg of safener/ha, is generally applied.

Preferred formulations have especially the following compositions:
(% = percent by weight):

### Emulsifiable concentrates:

| | |
|---|---|
| active ingredient: | 1 to 95 %, preferably 60 to 90 % |
| surface-active agent: | 1 to 30 %, preferably 5 to 20 % |
| liquid carrier: | 1 to 80 %, preferably 1 to 35 % |

### Dusts:

| | |
|---|---|
| active ingredient: | 0.1 to 10 %, preferably 0.1 to 5 % |
| solid carrier: | 99.9 to 90 %, preferably 99.9 to 99 % |

### Suspension concentrates:

| | |
|---|---|
| active ingredient: | 5 to 75 %, preferably 10 to 50 % |
| water: | 94 to 24 %, preferably 88 to 30 % |
| surface-active agent: | 1 to 40 %, preferably 2 to 30 % |

### Wettable powders:

| | |
|---|---|
| active ingredient: | 0.5 to 90 %, preferably 1 to 80 % |
| surface-active agent: | 0.5 to 20 %, preferably 1 to 15 % |
| solid carrier: | 5 to 95 %, preferably 15 to 90 % |

### Granules:

| | |
|---|---|
| active ingredient: | 0.1 to 30 %, preferably 0.1 to 15 % |
| solid carrier: | 99.5 to 70 %, preferably 97 to 85 %, |

The following Examples further illustrate, but do not limit, the invention.

| F1. Emulsifiable concentrates | a) | b) | c) | d) |
|---|---|---|---|---|
| active ingredient | 5 % | 10 % | 25 % | 50% |
| calcium dodecylbenzenesulfonate | 6 % | 8 % | 6 % | 8% |
| castor oil polyglycol ether (36 mol of ethylene oxide) | 4 % | - | 4 % | 4% |
| octylphenol polyglycol ether (7-8 mol of ethylene oxide) | - | 4 % | - | 2% |
| NMP | - | - | 10% | 20% |
| arom. hydrocarbon mixture C₉-C₁₂ | 85 % | 78 % | 55 % | 16% |

Emulsions of any desired concentration can be prepared from such concentrates by dilution with water.

| F2. Solutions | a) | b) | c) | d) |
|---|---|---|---|---|
| active ingredient | 5 % | 10% | 50% | 90% |
| 1-methoxy-3-(3-methoxy-propoxy)-propane | - | 20% | 20% | - |
| polyethylene glycol MW 400 | 20 % | 10% | - | - |
| NMP | - | - | 30% | 10% |
| arom. hydrocarbon mixture C₉-C₁₂ | 75 % | 60 % | - | - |

The solutions are suitable for application in the form of microdrops.

| F3. Wettable powders | a) | b) | c) | d) |
|---|---|---|---|---|
| active ingredient | 5 % | 25 % | 50 % | 80 % |
| sodium lignosulfona | 4 % | - | 3 % | - |
| sodium lauryl sulfate | 2 % | 3 % | - | 4 % |
| sodium diisobutylnaphthalene sulfonate | - | 6 % | 5 % | 6 % |
| octylphenol polyglycol ether (7-8 mol of ethylene oxide) | - | 1 % | 2 % | - |
| highly disperse silicic acid | 1 % | 3 % | 5 % | 10 % |
| kaolin | 88 % | 62 % | 35 % | - |

The active ingredient is thoroughly mixed with the additives and the mixture is thoroughly ground in a suitable mill, yielding wettable powders which can be diluted with water to give suspensions of any desired concentration.

| F4. Coated granules | a) | b) | c) |
|---|---|---|---|
| active ingredient | 0.1 % | 5% | 15 % |
| highly disperse silicic acid | 0.9 % | 2% | 2% |
| inorg. carrier (diameter 0.1 - 1 mm) e.g. CaCO₃ or SiO₂ | 99.0 % | 93 % | 83 % |

The active ingredient is dissolved in methylene chloride, the solution is sprayed onto the carrier and the solvent is subsequently evaporated off *in vacuo.*

| F5. Coated granules | a) | b) | c) |
|---|---|---|---|
| active ingredient | 0.1 % | 5 % | 15 % |
| polyethylene glycol MW 200 | 1.0 % | 2 % | 3 % |
| highly disperse silicic acid | 0.9 % | 1 % | 2 % |
| inorg. carrier (diameter 0.1 - 1 mm) e.g. CaCO₃ or SiO₂ | 98.0 % | 92 % | 80 % |

The finely ground active ingredient is applied uniformly, in a mixer, to the carrier moistened with polyethylene glycol. Non-dusty coated granules are obtained in this manner.

| F6. Extruder granules | a) | b) | c) | d) |
|---|---|---|---|---|
| active ingredient | 0.1 % | 3 % | 5 % | 15 % |
| sodium lignosulfonate | 1.5 % | 2 % | 3 % | 4 % |
| carboxymethylcellulose | 1.4 % | 2 % | 2 % | 2 % |
| kaolin | 97.0 % | 93 % | 90 % | 79 % |

The active ingredient is mixed and ground with the additives and the mixture is moistened with water. The resulting mixture is extruded and then dried in a stream of air.

| F7. Dusts | a) | b) | c) |
|---|---|---|---|
| active ingredient | 0.1 % | 1 % | 5 % |
| talcum | 39.9 % | 49 % | 35 % |
| kaolin | 60.0 % | 50 % | 60 % |

Ready-to-use dusts are obtained by mixing the active ingredient with the carriers and grinding the mixture in a suitable mill.

| F8. Suspension concentrates | a) | b) | c) | d) |
|---|---|---|---|---|
| active ingredient | 3 % | 10 % | 25 % | 50 % |
| ethylene glycol | 5 % | 5 % | 5 % | 5 % |
| nonylphenol polyglycol ether (15 mol of ethylene oxide) | - | 1 % | 2 % | - |
| sodium lignosulfonate | 3 % | 3 % | 4 % | 5 % |
| carboxymethylcellulose | 1 % | 1 % | 1 % | 1 % |
| 37 % aqueous formaldehyde solution | 0.2 % | 0.2 % | 0.2 % | 0.2 % |
| silicone oil emulsion | 0.8 % | 0.8 % | 0.8 % | 0.8 % |
| water | 87 % | 79 % | 62 % | 38 % |

The finely ground active ingredient is intimately mixed with the additives, yielding a suspension concentrate from which suspensions of any desired concentration can be prepared by dilution with water.

### EXAMPLE 1

Glass house tests are conducted to determine the safening effect of 1-[4-(N-2-methoxybenzoyl-sulfamoyl)-phenyl]-3-methylurea on a number of different ACCase inhibiting herbicides in maize which is tolerant to sethoxydim and cycloxydim. Applications are made to four conventional maize varieties ("AVENIR", "CLAXXON", "PTEROXX" and "SUNDANCE") and two tolerant varieties ("DK-592SR" and "LEXXOR"). The safener is applied as a 1:1 w/w ratio with the ACCase inhibiting herbicide as a simultaneous post-emergence application when the maize is 25 to 45 cm in height. Results are presented in Table 1 below (an average value of each of the four conventional varieties and the two tolerant varieties is indicated). Crop safety is assessed 14 days after application (DAA) of the safener / herbicide and is calculated using the following formula:- Crop safety = 100 - % control observed. Synergy is observed where the crop safety observed is greater than the expected crop safety, which is calculated as follows:- Expected safety = (Observed safety provided by SR maize (A) + Observed safety provided by safener on conventional varieties (B)) - (A.B/100).

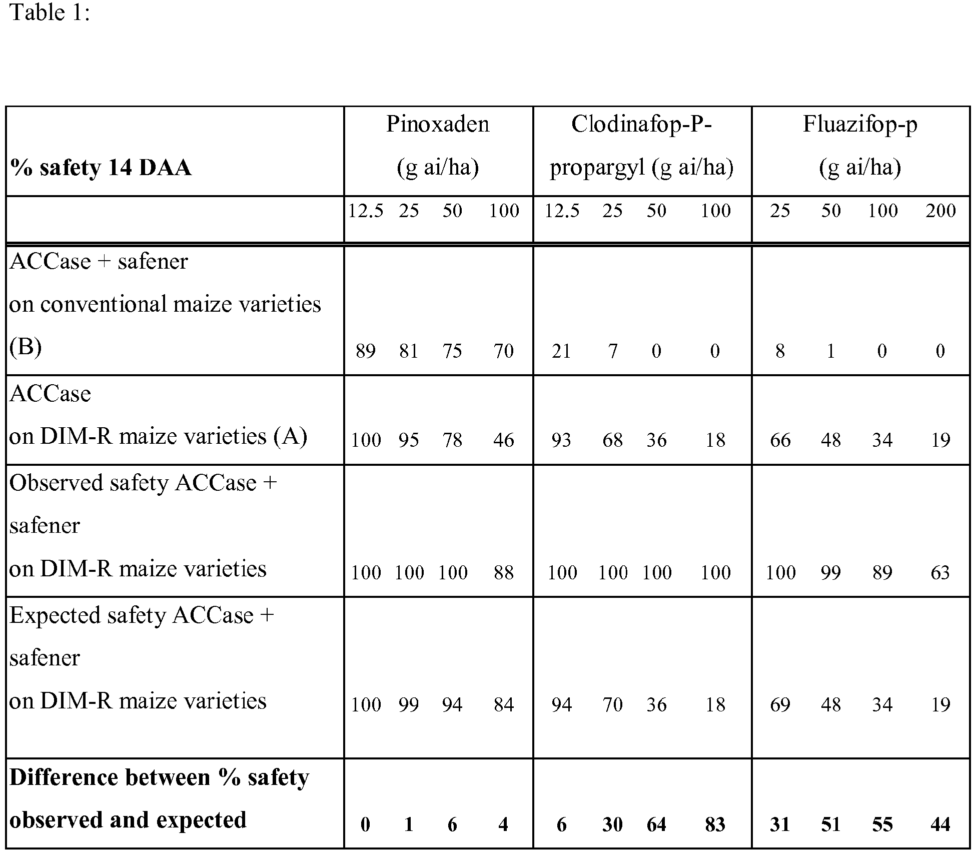

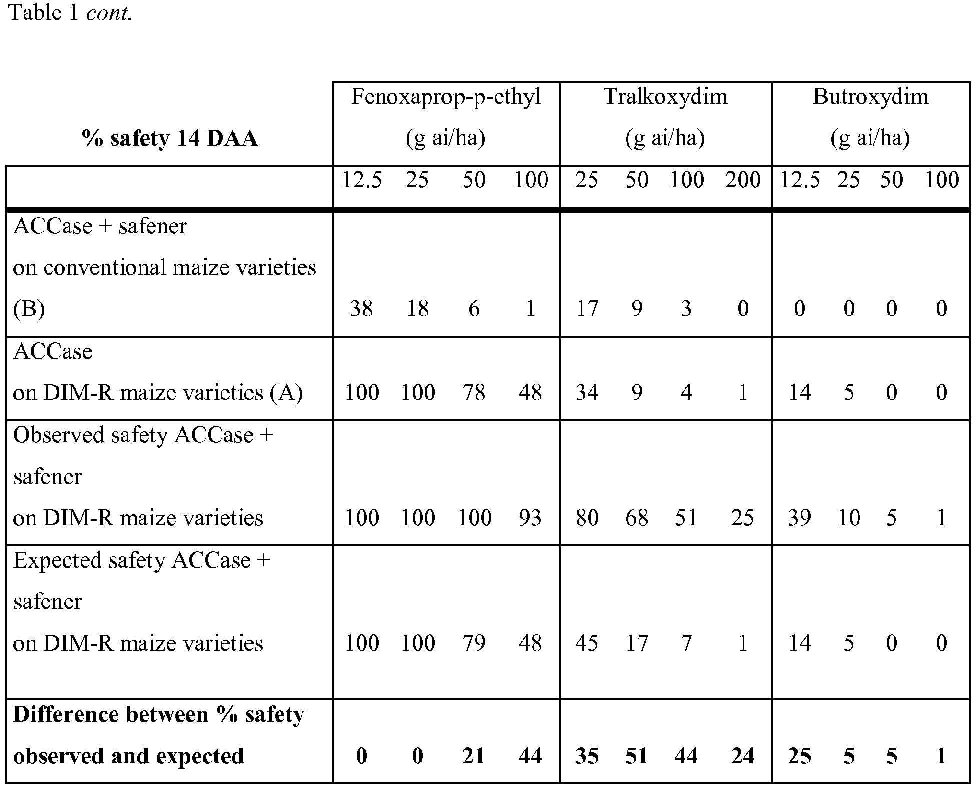

These results show that the combination of the SR maize and the safener affords very good safening of various ACCase inhibiting herbicides.

## Claims

1. A method of protecting maize, which is tolerant to cycloxydim and sethoxydim, from application of a damaging ACCase inhibiting herbicide selected from the group consisting of pinoxaden, clodinafop-P-propargyl, fenoxaprop-P-ethyl, fluazifop-P-butyl, butroxydim and tralkoxydim, the method comprising applying to said maize, parts thereof or locus thereof an antagonistically effective amount of the safener N-(2-methoxybenzoyl)-4-[(methylaminocarbonyl)amino]benzenesulfonamide.

2. A method of selectively controlling weeds at a locus, the locus comprising maize which is tolerant to cycloxydim and sethoxydim and weeds, the method comprising applying to the locus a herbicidal composition comprising a weed controlling amount of a damaging ACCase inhibiting herbicide selected from the group consisting of pinoxaden, clodinafop-P-propargyl, fenoxaprop-P-ethyl, fluazifop-P-butyl, butroxydim and tralkoxydim, wherein the maize is protected from the damaging ACCase inhibiting herbicide by applying to said maize, parts thereof or locus thereof an antagonistically effective amount of the safener N-(2-methoxybenzoyl)-4-(methylaminocarbonyl)amino]-benzenesulfonamide.

3. A method according to any one of the previous claims, wherein the ACCase inhibiting herbicide is selected from the group consisting of pinoxaden, clodinafop-P-propargyl, fenoxaprop-P-ethyl and fluazifop-P-butyl.

4. A method according to any one of the previous claims, wherein the safener is applied to the maize seed.

5. A method according to claim 2, wherein the damaging ACCase inhibiting herbicide and safener are combined in a tank mix and applied to the locus as a post-emergence application.

## Patentansprüche

1. Verfahren zum Schützen von gegenüber Cycloxydim und Sethoxydim tolerantem Mais gegen die Anwendung eines schädigenden ACCase-inhibierenden Herbizids ausgewählt aus der Gruppe bestehend aus Pinoxaden, Clodinafop-P-propargyl, Fenoxaprop-P-ethyl, Fluazifop-P-butyl, Butroxydim und Tralkoxydim, wobei das Verfahren das Aufbringen einer antagonistisch wirksamen Menge des Safeners N-(2-Methoxybenzoyl)-4-[(methylaminocarbonyl)amino]benzolsulfonamid auf den Mais, Teile davon oder den Standort davon umfasst.

2. Verfahren zur selektiven Bekämpfung von Unkraut an einem Standort, wobei der Standort gegenüber Cycloxydim und Sethoxydim toleranten Mais und Unkraut umfasst, wobei das Verfahren das Aufbringen einer Unkraut bekämpfenden Menge eines schädigenden ACCase-inhibierenden Herbizids ausgewählt aus der Gruppe bestehend aus Pinoxaden, Clodinafop-P-propargyl, Fenoxaprop-P-ethyl, Fluazifop-P-butyl, Butroxydim und Tralkoxydim umfassenden herbiziden Zusammensetzung auf den Standort umfasst, wobei der Mais gegen das schädigende ACCase-inhibierende Herbizid geschützt wird, indem man auf den Mais, Teile davon oder den Standort davon eine antagonistisch wirksame Menge des Safeners N-(2-Methoxybenzoyl)-4-[(methylamino-carbonyl)amino]benzolsulfonamid aufbringt.

3. Verfahren nach einem der vorhergehenden Ansprüche, wobei das ACCase-inhibierende Herbizid aus der aus Pinoxaden, Clodinafop-P-propargyl, Fenoxaprop-P-ethyl und Fluazifop-P-butyl bestehenden Gruppe ausgewählt ist.

4. Verfahren nach einem der vorhergehenden Ansprüche, wobei der Safener auf das Maissaatgut aufgebracht wird.

5. Verfahren nach Anspruch 2, wobei man das schädigende ACCase-inhibierende Herbizid und den Safener in einer Tankmischung kombiniert und als Nachauflaufanwendung auf den Standort aufbringt.

## Revendications

1. Procédé de protection de maïs, qui est tolérant au cycloxydim et au séthoxydim, grâce à l'application d'un herbicide inhibiteur de ACCase dommageable choisi dans le groupe constitué des pinoxaden, clodinafop-P-propargyl, fenoxaprop-P-éthyl, fluazifop-P-butyl, butroxydim et tralkoxydim, le procédé comprenant l'application sur ledit maïs, des parties de celui-ci ou l'emplacement de celui-ci d'une quantité efficace en tant qu'antagoniste du phytoprotecteur N-(2-méthoxybenzoyl)-4-[(méthylaminocarbonyl)amino]-benzènesulfonamide.

2. Procédé de lutte sélective contre les mauvaises herbes à un emplacement, l'emplacement comprenant du maïs qui est tolérant au cycloxydim et au séthoxydim et des mauvaises herbes, le procédé comprenant l'application à l'emplacement d'une composition herbicide comprenant une quantité de contrôle des mauvaises herbes d'un herbicide inhibiteur de ACCase dommageable choisi dans le groupe constitué des pinoxaden, clodinafop-P-propargyl, fenoxaprop-P-éthyl, fluazifop-P-butyl, butroxydim et tralkoxydim, dans lequel le maïs est protégé contre l'herbicide inhibiteur de ACCase dommageable par application sur ledit maïs, des parties de celui-ci ou l'emplacement de celui-ci d'une quantité efficace en tant qu'antagoniste du phytoprotecteur N-(2-méthoxybenzoyl)-4-[(méthylaminocarbonyl)amino]-benzènesulfonamide.

3. Procédé selon l'une quelconque des revendications précédentes, dans lequel l'herbicide inhibiteur de ACCase est choisi dans le groupe constitué des pinoxaden, clodinafop-P-propargyl, fenoxaprop-P-éthyl et fluazifop-P-butyl.

4. Procédé selon l'une quelconque des revendications précédentes, dans lequel le phytoprotecteur est appliqué sur la semence de maïs.

5. Procédé selon la revendication 2, dans lequel l'herbicide inhibiteur de ACCase dommageable et le phytoprotecteur sont combinés dans une cuve de mélange et appliqués sur l'emplacement en tant qu'application post-levée.
